# EUROPÄISCHE PATENTSCHRIFT

(11) **EP 2 407 368 B1**
(45) Veröffentlichungstag und Bekanntmachung des Hinweises auf die Patenterteilung: **29.01.2014**
(21) Anmeldenummer: 10007367.5
(22) Anmeldetag: 16.07.2010
(51) Int. Cl.: B61K 9/04, F16C 19/52, F16H 57/02, G01K 13/00

(54) **Achsgetriebe eines Schienenfahrzeugs**
Shaft drive of a rail vehicle
Pont moteur d'un véhicule sur rails

(43) Veröffentlichungstag der Anmeldung: 18.01.2012
(73) Patentinhaber: Siemens Aktiengesellschaft, 80333 München (DE)
(72) Erfinder: Frank, Hartmut, 09306 Rochlitz (DE); Oehler, Thomas, 09114 Chemnitz (DE)

(56) Entgegenhaltungen:
- EP-A1- 0 792 784
- DE-A1- 10 136 438
- US-A- 5 392 716
- US-A1- 2008 234 964

## Beschreibung

Achsgetriebe dienen in Schienenfahrzeugen dazu, mittels eines an ein Achsgetriebe angeschlossenen Generators elektrische Verbraucher, wie Klimageräte, in einem Wagon mit elektrischer Energie zu versorgen. Derartige elektrische Verbraucher realisieren zwar überwiegend Komfortfunktionen, allerdings sind diese insbesondere bei extremen Außentemperaturen durchaus relevanten für einen unkritischen Betrieb eines Schienenfahrzeugs. Daher werden auch Achsgetriebe für Schienenfahrzeug im Betrieb intensiv überwacht, um kritische Betriebszustände eines Schienenfahrzeugs erkennen und diesen ggf. vorbeugen zu können.

Aus US 2008/0234964 A1 ist eine Diagnosevorrichtung zur Erkennung eines gestörten Betriebszustandes bei einem Getriebe für ein Schienenfahrzeug bekannt. Die Diagnosevorrichtung umfaßt an Lagerstellen des Getriebes installierte Temperatur- und Schwingungssensoren sowie eine mit diesen verbundene Signalverarbeitungseinheit. Anhand durch die Temperatur- und Schwingungssensoren erfaßter Signale ermittelt die Signalverarbeitungseinheit ein Vorliegen einer Störung und ggf. einen Grad einer bestehenden Schädigung.

In WO 2006/062889 A2 ist eine Zustandsüberwachungseinrichtung für ein Drehgestell eines Schienenfahrzeugs beschrieben, die eine Vielzahl von Infrarotsensoren umfaßt. Die Infrarotsensoren sind matrixartig angeordnet und können unabhängig voneinander auf einen jeweiligen Abtastbereich am Drehgestellt ausgerichtet werden. Anhand durch die Infrarotsensoren erfaßter Abtastsignale kann einerseits ein Typ eines Drehgestells auf Basis gespeicherter Referenzdaten identifiziert werden. Andererseits können für eine Zustandsbewertung des Drehgestells relevante Daten ermittelt werden.

In der US 5 392 716 A ist ein Kontrollsystem für Fahrmotoren eines Schienenfahrzeugs beschrieben. An jeder durch einen Fahrmotor angetriebenen Radachse des Schienenfahrzeugs ist ein Antriebszahnrad angeordnet. Das Kontrollsystem weist Sensoren auf, welche die Temperatur jeweils eines linken und rechten Radachslagers jeder Achse erfassen. Um die Position (links/rechts) eines überhitzten Lagers an jeder Achse feststellen zu können, sind die Sensoren in Parallelschaltung mit einer Detektionseinheit verbunden.

Bei bestehenden Schienenfahrzeugen weisen installierte Kabelbäume eine begrenzte Anzahl von Anschlüssen für Sensoreinheiten zur Überwachung von Lagerstellen in Achsgetrieben auf. Aufgrund dessen steht vielfach nicht für jede Lagerstelle ein Anschluß für eine zugeordnete Sensoreinheit zur Verfügung, so daß zahlreiche Lagerstellen durch ermittelte Meßwerte nicht repräsentiert sind. Sowohl eine komplette Neuverkabelung als auch eine Überwachung einer Teilmenge vorhandener Lagerstellen stellen letztlich unbefriedigende Lösungen für eine umfassende Zustandsüberwachung bei Achsgetrieben dar.

Der vorliegenden Erfindung liegt daher die Aufgabe zugrunde, ein Achsgetriebe für Schienenfahrzeuge zu schaffen, dessen Lagerstellen sich einerseits vollständig überwachen lassen und dessen Sensoreinheiten sich andererseits an bestehende Kabelbäume in Schienenfahrzeugen anschließen lassen.

Diese Aufgabe wird erfindungsgemäß durch ein Schienenfahrzeug mit den in Anspruch 1 angegebenen Merkmalen gelöst. Vorteilhafte Weiterbildungen sind in den abhängigen Ansprüchen angegeben.

Das erfindungsgemäße Schienenfahrzeug umfasst ein Achsgetriebe mit einem mit einer Radachse des Schienenfahrzeugs verbindbaren ersten Zahnrad. Außerdem ist ein mit einer Abtriebswelle zum Anschluß eines elektrischen Generators verbundenes zweites Zahnrad vorgesehen. Das zweite Zahnrad steht unmittelbar oder mittelbar über zumindest ein weiteres Zahnrad mit dem ersten Zahnrad in Eingriff. Den Zahnrädern sind Lager zugeordnet, wobei jeweils an jedem Lager zumindest eine Sensoreinheit zur Zustandsüberwachung der Lager angeordnet ist. Insgesamt ist eine erste Anzahl von Sensoreinheiten vorgesehen, während das Schienenfahrzeug einen Kabelbaum mit einer zweiten Anzahl von Anschlüssen für Sensoreinheiten je Achsgetriebe aufweist, wobei die zweite Anzahl kleiner als die erste Anzahl ist. Darüber hinaus ist eine Mehrzahl von mehrere Sensoreinheiten umfassenden Reihenschaltungen vorgesehen, die jeweils an einen Anschluß des Kabelbaums anschließbar sind. Auf diese Weise können sämtliche Lagerstellen im Achsgetriebe überwacht werden, ohne daß der Kabelbaum des Schienenfahrzeugs angepaßt werden muß. Insgesamt ergibt sich ein reduzierter Verkabelungsaufwand sowie eine erhöhte Ausfallsicherheit aufgrund einer Überwachung aller Lagerstellen.

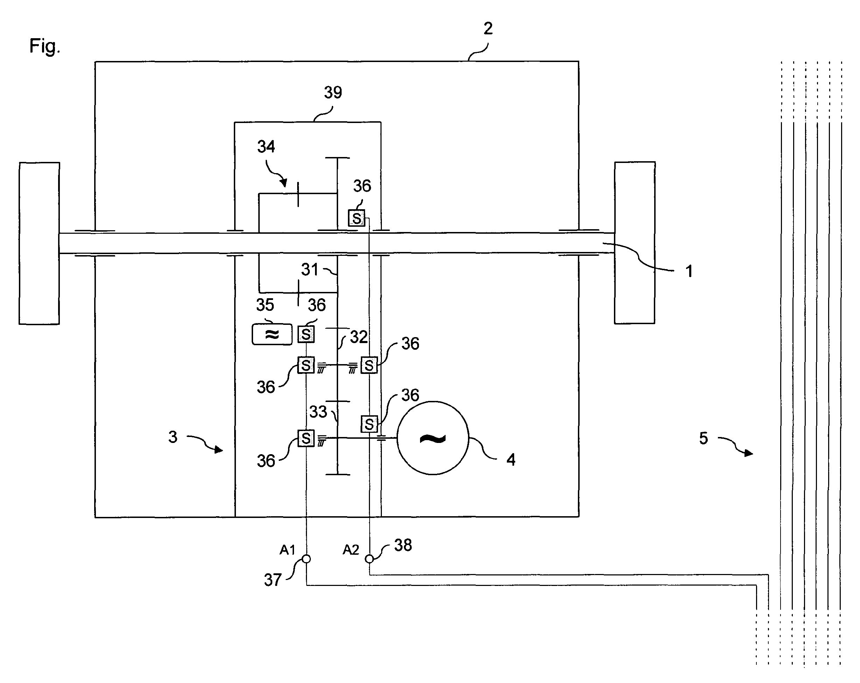

Die nachfolgende Erfindung wird an einem Ausführungsbeispiel anhand der Zeichnung näher erläutert. Es zeigt die
- Figur: eine schematische Darstellung einer Radachse eines Schienenfahrzeugs und eines Achsgetriebes.

In der Figur sind eine Radachse 1 eines Schienenfahrzeugs und ein Achsgetriebe 3 schematisch dargestellt. Das Achsgetriebe umfaßt mehrere Zahnräder 31-33, den Zahnrädern 31-33 zugeordnete Lager und Sensoreinheiten 36, die in einem gemeinsamen Getriebegehäuse 39 angeordnet sind. Das Getriebegehäuse ist an einem Drehgestell 2 des Schienenfahrzeugs montiert, in dem die Radachse 1 gelagert ist.

Das Achsgetriebe 3 umfaßt antriebsseitig ein mittels einer Kupplung 34 mit der Radachse 1 verbindbares erstes Zahnrad 31. Außerdem ist ein mit einer Abtriebswelle zum Anschluß eines elektrischen Generators 4 verbundenes zweites Zahnrad vorgesehen, das über ein drittes Zahnrad 32 mit dem ersten Zahnrad 31 in Eingriff steht. Entsprechend dem vorliegenden Ausführungsbeispiel sind sämtliche Zahnräder 31-33 als Stirnräder ausgebildet.

An jedem der den Zahnrädern 31-33 zugeordneten Lager ist jeweils eine Sensoreinheit 36 zur Zustandsüberwachung der Lager angeordnet. Zusätzlich ist auch eine Sensoreinheit 36 für einen Schmierstoffsumpf 35 des Achsgetriebes 3 vorgesehen. Insgesamt sind 6 Sensoreinheiten 36 vorgesehen. Im vorliegenden Ausführungsbeispiel weist das Schienenfahrzeug einen Kabelbaum 5 mit nur 2 Anschlüssen 37-38 für Sensoreinheiten 36 je Achsgetriebe 3 auf. Daher sind hier 2 jeweils 3 Sensoreinheiten 36 umfassende Reihenschaltungen vorgesehen, die jeweils an einen Anschluß 37-38 des Kabelbaums 5 angeschlossen sind.

Entsprechend einer bevorzugten Ausgestaltung sind die Sensoreinheiten 36 Temperatursensoren und Bimetallschalter. Bei den Temperatursensoren handelt es sich beispielsweise um PT-100-Temperatursensoren Im vorliegenden Ausführungsbeispiel umfaßt eine Reihenschaltung jeweils einen Temperatursensor und zwei in Reihe zum Temperatursensor geschaltete Bimetallschalter. Zusätzlich ist parallel zu jedem Bimetallschalter jeweils ein fester Widerstand angeschlossen. Bei Erreichen einer Nennschalttemperatur eines Bimetallschalters wird jeweils ein Kabelstrang-Meßkreis geöffnet, so daß ein ermittelbarer Meßstrom in einer Reihenschaltung von der Summe eines temperaturabhängigen Widerstands eines Temperatursensors und einem festen Widerstand abhängt. Erreichen in einer Reihenschaltung 2 Bimetallschalter ihre Nenntemperatur, hängt der Meßstrom entsprechend von der Summe des temperaturabhängigen Widerstands eines Temperatursensors und zwei festen Widerständen ab.

Mit bisherigen Lösungen können mit N Kabelsträngen lediglich N Lagerstellen überwacht werden, denen jeweils ein Temperatursensor zugeordnet ist. Daher wurde bei bisherigen Lösungen lediglich ein Teil der Lagerstellen in einem Achsmittengetriebe überwacht, so daß zahlreiche Lagerstellen durch die ermittelten Meßwerte nicht repräsentiert sind. Demgegenüber ermöglicht die vorliegende Erfindung eine Reduktion von Verkabelungsaufwand zur Überwachung von Lagerstellen in Achsgetrieben sowie eine erhöhte Ausfallsicherheit aufgrund einer Überwachung im wesentlichen aller Lagerstellen.

Die Anwendung der vorliegenden Erfindung ist nicht auf das beschriebene Ausführungsbeispiel beschränkt.

## Patentansprüche

1. Schienenfahrzeug mit einem Achsgetriebe (3) mit
- einem mit einer Radachse (1) des Schienenfahrzeugs verbindbaren ersten Zahnrad (31),
- einem mit einer Abtriebswelle zum Anschluß eines elektrischen Generators (4) verbundenen zweiten Zahnrad (33), das unmittelbar oder mittelbar über zumindest ein weiteres Zahnrad (32) mit dem ersten Zahnrad (31) in Eingriff steht,
- den Zahnrädern (31, 32, 33) zugeordneten Lagern,
- jeweils zumindest einer an jedem Lager angeordneten Sensoreinheit (36) zur Zustandsüberwachunq der Lager, wobei insgesamt eine erste Anzahl von Sensoreinheiten (36) vorgesehen ist, und wobei das Schienenfahrzeug einen Kabelbaum (5) mit einer zweiten Anzahl von Anschlüssen(37, 38) für Sensoreinheiten (36) je Achsgetriebe (3) aufweist und die zweite Anzahl kleiner als die erste Anzahl ist,
- einer Mehrzahl von mehrere Sensoreinheiten (36) umfassenden Reihenschaltungen, die jeweils an einen Anschluß des Kabelbaums (5) anschließbar sind.

2. Schienenfahrzeug nach Anspruch 1,
bei dem das erste Zahnrad (31) mittels einer Kupplung (34) mit der Radachse (1) verbindbar ist.

3. Schienenfahrzeug nach einem der Ansprüche 1 oder 2,
bei dem die Zahnräder (31, 32, 33), Lager und Sensoreinheiten (36) in einem gemeinsamen Getriebegehäuse (39) angeordnet sind, das an einem Drehgestell (2) des Schienenfahrzeugs montierbar ist.

4. Schienenfahrzeug nach einem der Ansprüche 1 bis 3,
bei dem die Sensoreinheiten (36) Temperatursensoren und/oder Bimetallschalter sind.

5. Schienenfahrzeug nach einem der Ansprüche 1 bis 4,
bei dem eine Reihenschaltung jeweils einen Temperatursensor, einen in Reihe zum Temperatursensor geschalteten Bimetallschalter und einen parallel zum Bimetallschalter geschalteten Widerstand umfaßt.

6. Schienenfahrzeug nach einem der Ansprüche 1 bis 5,
bei dem die erste Anzahl zumindest das Doppelte der zweiten Anzahl ist.

7. Schienenfahrzeug nach einem der Ansprüche 1 bis 6,
bei dem die erste Anzahl von Sensoreinheiten (36) auch eine einem Schmierstoffsumpf (35) des Achsgetriebes (3) zugeordnete Sensoreinheit (36) umfaßt.

8. Schienenfahrzeug nach einem der Ansprüche 1 bis 7,
bei dem sämtliche Zahnräder (31, 32, 33) als Stirnräder ausgebildet sind.

## Claims

1. Rail vehicle with a shaft drive (3) having
- A first gear wheel (31) which can be connected to a wheel axle (1) of the rail vehicle,
- A second gear wheel (33) connected to an output shaft for connecting an electrical generator (4), said second gear wheel engaging directly or indirectly with the first gear wheel (31) by way of at least one further gear wheel (32),
- Bearings assigned to the gear wheels (31, 32, 33),
- At least one sensor unit (36) arranged on each bearing respectively for status monitoring of the bearings, wherein provision is made overall for a first number of sensor units (36), and wherein the rail vehicle has a cable loop (5) with a second number of connections (37, 38) for sensor units (36) per shaft drive (3) and the second number is lower than the first number.
- A plurality of series circuits including a number of sensor units (36), which can each be connected to a connection of the cable loop (5).

2. Rail vehicle according to claim 1,
in which the first gear wheel (31) can be connected to the wheel axle (1) by means of a coupling (34).

3. Rail vehicle according to one of claims 1 or 2, in which the gear wheels (31, 32, 33), bearings and sensor units (36) are arranged in a shared transmission housing (39) which can be mounted on a pivot mounting (2) of the rail vehicle.

4. Rail vehicle according to one of claims 1 to 3, in which the sensor units (36) are temperature sensors and/or bimetallic switches.

5. Rail vehicle according to one of claims 1 to 4, in which a series circuit includes in each instance a temperature sensor, a bimetallic switch connected in series with the temperature sensor and a resistor connected in parallel to the bimetallic switch.

6. Rail vehicle according to one of claims 1 to 5, in which the first number is at least twice the second number.

7. Rail vehicle according to one of claims 1 to 6, in which the first number of sensor units (36) also includes a sensor unit (36) assigned to a lubricant sump (35) of the shaft drive (3).

8. Rail vehicle according to one of claims 1 to 7, in which all gear wheels (31, 32, 33) are embodied as spur wheels.

## Revendications

1. Véhicule ferroviaire ayant un pont moteur ( 3 ) comprenant
- une première ( 31 ) roue dentée, pouvant être reliée à un essieu ( 1 ) du véhicule ferroviaire,
- une deuxième roue ( 33 ) dentée, qui est reliée à un arbre mené pour le raccordement d'une génératrice ( 4 ) électrique et qui est en prise directement ou indirectement avec la première roue ( 31 ) dentée par au moins une autre roue ( 32 ) dentée,
- des paliers associés aux roues ( 31, 32, 33 ) dentées,
- respectivement au moins une unité ( 36 ) de capteur monté sur chaque palier pour le contrôle de l'état du palier, dans lequel il est prévu en tout un premier nombre d'unités ( 36 ) de capteur, et dans lequel le véhicule ferroviaire a, par pont moteur ( 3 ), un harnais ( 5 ) de câble ayant un deuxième nombre de bornes ( 37, 38 ) pour des unités ( 36 ) de capteur et le deuxième nombre est plus petit que le premier nombre,
- une multiplicité de circuits série, qui comprennent plusieurs unités ( 36 ) de capteur et qui peuvent être raccordés respectivement à une borne du harnais ( 5 ) de câble.

2. Véhicule ferroviaire suivant la revendication 1,
dans lequel la première roue ( 31 ) dentée peut être reliée à l'essieu ( 1 ) au moyen d'un accouplement ( 34 ).

3. Véhicule ferroviaire suivant l'une des revendications 1 ou 2,
dans lequel les roues ( 31, 32, 33 ) dentées, les paliers et les unités ( 36 ) de capteur sont disposés dans un carter ( 39 ) de transmission commun, qui peut être monté sur un bogie ( 2 ) du véhicule ferroviaire.

4. Véhicule ferroviaire suivant l'une des revendications 1 ou 3,
dans lequel les unités ( 36 ) de capteur sont des capteurs de température et/ou des commutateurs à bilame.

5. Véhicule ferroviaire suivant l'une des revendications 1 ou 4,
dans lequel un circuit série comprend respectivement, un capteur de température, un commutateur à bilame monté en série avec le capteur de température et une résistance montée en parallèle avec le commutateur à bilame.

6. Véhicule ferroviaire suivant l'une des revendications 1 ou 5,
dans lequel le premier nombre est au moins le double du deuxième nombre.

7. Véhicule ferroviaire suivant l'une des revendications 1 ou 6,
dans lequel le premier nombre d'unités ( 36 ) de capteur comprend également une unité ( 36 ) de capteur associée à un réservoir ( 35 ) de lubrifiant du pont moteur ( 3 ).

8. Véhicule ferroviaire suivant l'une des revendications 1 ou 7,
dans lequel l'ensemble des roues ( 31, 32, 33 ) dentées est constitué sous la forme de roues droites.
